# DEMANDE DE BREVET EUROPEEN

(11) **EP 0 937 686 A1**
(43) Date de publication de la demande: **25.08.1999**
(21) Numéro de dépôt: 99400270.7
(22) Date de dépôt: 05.02.1999
(51) Int. Cl.: C02F 3/30

(54) **Installation et procédé spécialement destinés au traitement des effluents viti-vinicoles**

(30) Priorité: 20.02.1998 FR 9802104
(71) Demandeur: EPARCO, F-75009 Paris (FR)
(72) Inventeur: Philip, Hervé, 34570 Pignan (FR); Maunoir, Siegfried, 34250 Palavas (FR)
(74) Mandataire: Derambure, Christian

(57) **Abrégé**

Installation spécialement destinée au traitement des effluents viti-vinicoles d'au moins une exploitation, comprenant, d'amont vers l'aval :
- au moins une cuve de décantation-digestion (7) de volume V_{CD}, destinée à éliminer la majeure partie des matières en suspension dans les effluents à traiter ;
- au moins un premier filtre (15), de volume V_{PF}, destiné à éliminer une partie au moins des matières solubles dans les effluents à traiter ;
- au moins un second filtre (31), de surface S_{F} ; les dimensions volumiques V_{CD}, V_{PF} et surfacique S_{F} étant proportionnelles au volume V_{V} de production vinicole par an de l'exploitation.

## Description

L'invention se rapporte à une installation et à un procédé spécialement destinés au traitement des effluents viti-vinicoles.

Les effluents produits par les exploitations viti-vinicoles présentent une concentration en matières organiques très importante. Elle est en moyenne cinq fois supérieure à celle contenue dans les effluents domestiques.

Cette forte concentration est due principalement à une teneur élevée en matières organiques volatiles naturellement solubles dans l'eau.

Ces matières solubles sont par définition non décantables.

Le traitement efficace des effluents viti-vinicoles est de ce fait, relativement difficile.

De plus, les effluents viti-vinicoles ne sont produits que pendant une très courte période de l'année : les vendanges et les périodes de décuvage, ce qui représente deux à trois mois dans l'année.

Les systèmes classiquement utilisés pour le traitement des effluents sont des traitements par biomasse en suspension par exemple des boues activées, ou à biomasse fixée sur un lit bactérien par exemple.

De tels systèmes nécessitent préalablement à leur fonctionnement une mise en charge de la biomasse. De ce fait, un rendement correct de ces systèmes ne peut être obtenu que quelques semaines après le début de la période d'activité du système. Cela correspond en fait presque à la fin de la période de production des effluents viti-vinicoles.

Ces systèmes s'avèrent de ce fait mal adaptés à un traitement immédiat des effluents viti-vinicoles.

L'invention a pour but de résoudre ces inconvénients.

Elle vise ainsi à proposer une installation spécialement destinée au traitement des effluents viti-vinicoles qui soit immédiatement opérationnelle, de haut rendement et d'adaptation aisée aux variations de volumes d'effluents viti-vinicoles arrivant, à traiter.

A cet effet, un premier objet de l'invention concerne une installation spécialement destinée au traitement des effluents viti-vinicoles d'au moins une exploitation, comprenant en combinaison, d'amont vers l'aval :
- au moins une cuve de décantation-digestion de volume V_{CD}, destinée à éliminer la majeure partie des matières en suspension dans les effluents à traiter ;
- au moins un premier filtre, de volume V_{PF}, destiné à éliminer une partie au moins des matières solubles dans les effluents à traiter ;
- au moins un second filtre, de surface S_{F} ;
les dimensions volumiques V_{CD}, V_{PF} et surfacique S_{F}, respectivement de la cuve de décantation-digestion, du premier filtre et du second filtre étant proportionnelles au volume V_{V} de production viti-vinicole par an de l'exploitation.

Selon d'autres caractéristiques, le volume V_{CD} de la cuve de décantation-digestion est sensiblement égal au rapport V_{V}/200.

Le volume V_{CD} de la cuve de décantation-digestion est d'au moins quatre mètres cube.

Le volume V_{PF} du premier filtre est sensiblement égal au rapport V_{V}/200.

Le volume V_{PF} est d'au moins trois mètres cube.

La surface S_{F} du second filtre est sensiblement égale à V_{V} x 0.033.

Selon une variante, le premier filtre est un filtre anaérobie, tandis que le second filtre est un filtre aérobie.

Selon un mode de réalisation, l'installation comprend en outre, en amont de la cuve de décantation-digestion, des moyens de régulation du débit d'entrée dans la cuve de décantation-digestion, des effluents viti-vinicoles.

Les moyens de régulation sont munis d'au moins une pompe destinée notamment à réguler le débit d'entrée des effluents viti-vinicoles dans la cuve de décantation-digestion.

Le fonctionnement de la pompe est régulé par au moins un contacteur de niveau et au moins un temporisateur.

Les moyens de régulation ont un volume V_{C} qui est sensiblement égal au rapport V_{V}/300.

Le volume V_{C} des moyens de régulation est d'au moins trois mètres cube.

Selon une variante, l'installation comprend en outre au moins un regard de détente des effluents viti-vinicoles situé entre les moyens de régulation et la cuve de décantation-digestion.

Elle comprend en outre des moyens de distribution des effluents viti-vinicoles provenant du premier filtre et à destination du second filtre.

Selon une autre variante, elle comprend des moyens supplémentaires de filtration des effluents situés en aval du second filtre.

Les moyens supplémentaires de filtration ont une surface S_{SF} sensiblement égale à V_{V} x 0,1.

L'installation est de plus adaptée pour traiter les effluents domestiques.

Elle comprend à cet effet, en outre au moins une fosse septique spécialement destinée à traiter les effluents domestiques.

L'invention concerne de plus un procédé de traitement des effluents notamment viti-vinicoles comprenant en combinaison, les étapes suivantes :
- collecter les effluents viti-vinicoles ;
- réguler le débit des effluents collectés ;
- décanter et digérer une majeure partie des matières en suspension dans les effluents ;
- filtrer les effluents décantés ;
- filtrer les effluents une première fois filtrés ;
- récolter les effluents ainsi traités.

D'autres caractéristiques de l'invention ressortent de la description qui va suivre et se réfèrent aux figures annexées, dans lesquelles :

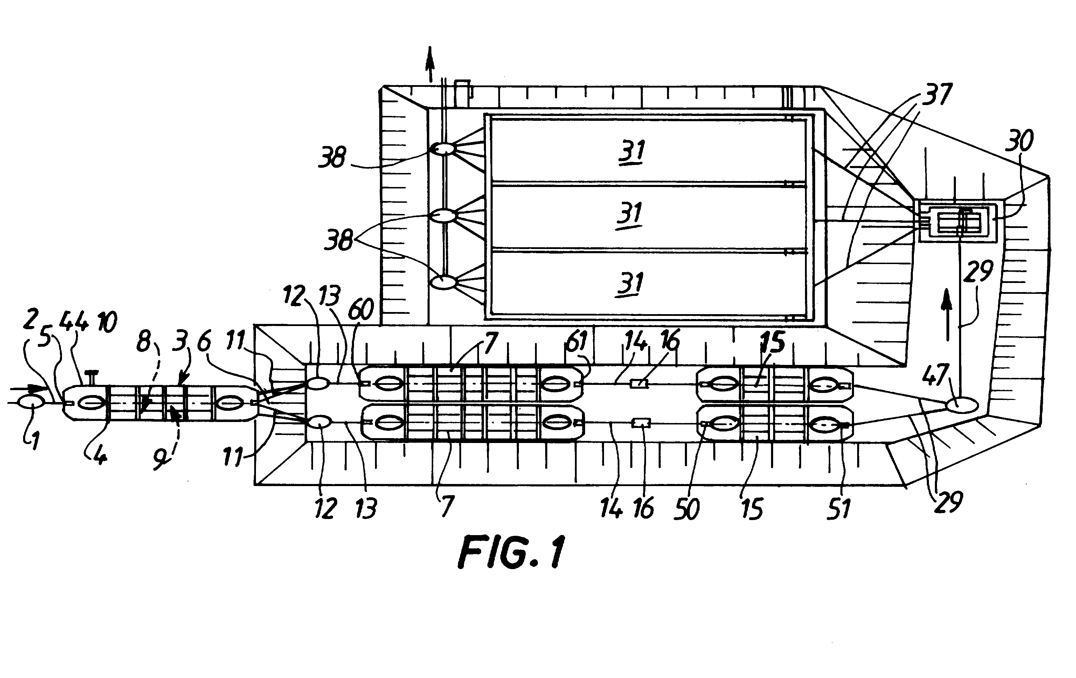

- la figure 1 est une vue schématique de dessus d'un mode de réalisation de l'installation ;

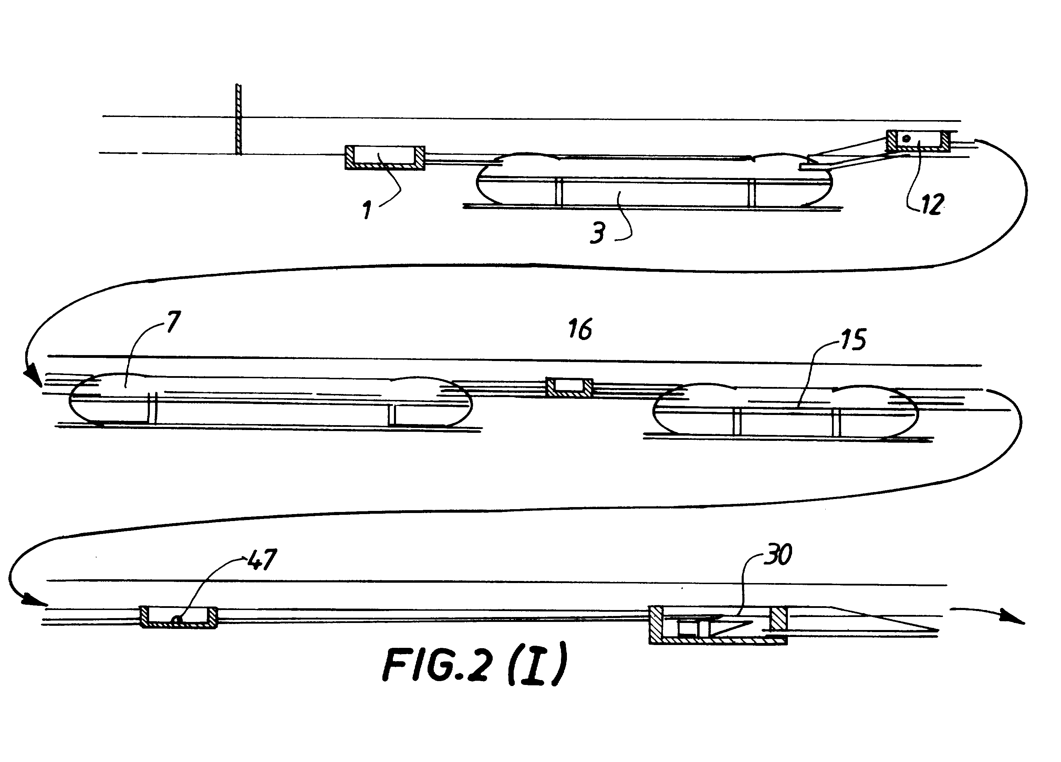

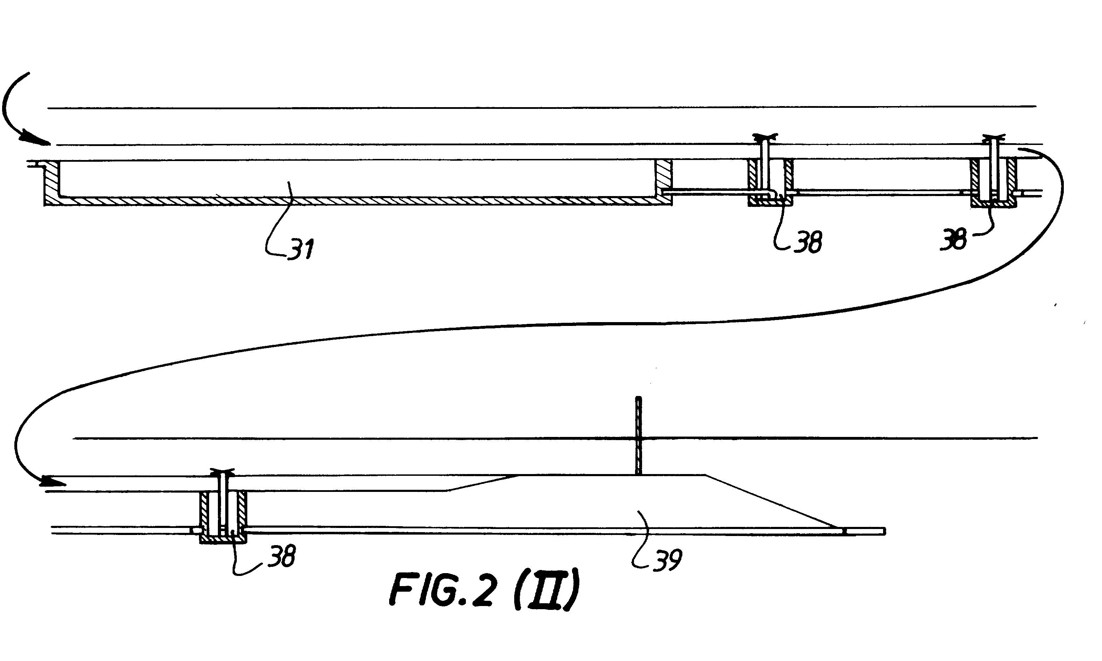

- la figure 2 (I, II) est un profil hydraulique de l'installation de la figure 1 ;

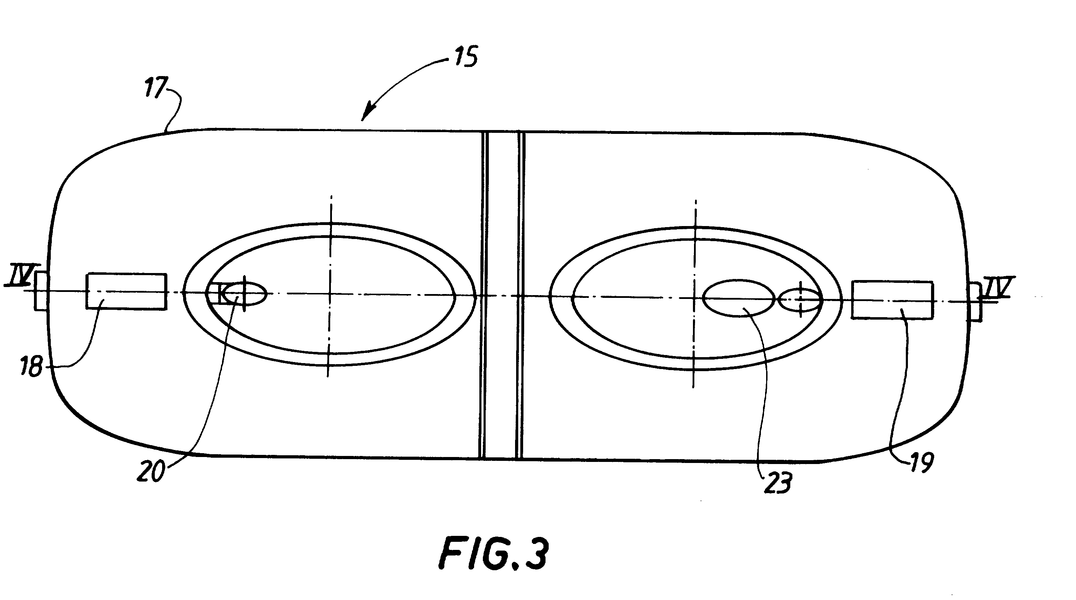

- la figure 3 est une vue schématique de dessus d'un mode de réalisation du premier filtre ;
- la figure 4 est une vue schématique en coupe longitudinal suivant la ligne IV-IV du premier filtre de la figure 3 ;
- la figure 5 est une vue schématique de dessus d'un mode de réalisation des moyens de distribution ;
- la figure 6 est une vue schématique en coupe transversale selon la ligne VI-VI des moyens de distribution de la figure 5 ;
- la figure 7 est une vue schématique en coupe longitudinale d'un mode de réalisation d'une cuve de décantation-digestion ;
- la figure 8 est une vue schématique de dessus d'un mode de réalisation du second filtre ;
- la figure 9 est une vue schématique de dessous du second filtre représenté sur la figure 8 ;
- la figure 10 est une vue schématique en coupe du second filtre suivant la ligne X-X des figures 8 et 9.

Dans la description qui va suivre, on entend par effluents viti-vinicoles, les eaux usées ou analogues issues directement de l'élaboration, de la conservation, du conditionnement ou du commerce du vin et autres spiritueux.

Conventionnellement, le volume de production d'une exploitation est exprimé en hectolitres, le volume de cuves en mètres cube (m³) et la surface des filtres en mètres carré (m²). Les rapports de calcul donnés dans la description intègrent la conversion des grandeurs.

On entend par volume des cuves, le volume utile au traitement des effluents.

L'installation illustrée sur les figures, est destinée à traiter les effluents viti-vinicoles d'une exploitation produisant un volume en vin V_{V} d'environ 2 000 hectolitres par an.

L'installation comprend tout d'abord en amont un regard de collecte 1 dans lequel se déversent les effluents viti-vinicoles provenant directement de l'exploitation.

Les effluents sont ensuite acheminés par des premiers conduits 2 d'effluents jusqu'à des moyens de régulation 3.

L'écoulement des effluents du regard de collecte 1 vers les moyens de régulation 3 se fait sous l'effet de la gravité.

Les moyens de régulation 3 sont destinés à réguler le débit d'entrée des effluents à traiter dans une cuve de décantation-digestion 7, disposée en aval.

Ces moyens 3 comprennent une cuve de régulation 4 alimentée en effluents à traiter depuis son entrée 5, par les premiers conduits 2 et jusqu'à la sortie 6 des effluents, en direction de la cuve de décantation-digestion 7.

Cette cuve de régulation 4 est munie d'au moins une pompe 8 destinée à réguler le niveau des effluents dans la cuve de régulation 4 et d'un système de création de turbulence 9 situé environ à mi-hauteur de la cuve 4.

Lorsque les effluents sont stockés dans la cuve de régulation 4, un début de fermentation a lieu.

Ceci provoque la flottaison des matières en suspension.

Le système 9 crée des turbulences permettant de mélanger ces matières dans les effluents.

La pompe 8 permet de distribuer les effluents à débit relativement constant vers la cuve de décantation-digestion 7.

Le fonctionnement de la pompe 8 est régulé par des contacteurs de niveau et un temporisateur se trouvant dans la cuve de régulation 4.

Cette pompe 8 est par exemple, une pompe à roue dilacératrice ou à roue vortex. Cette pompe permet le passage des rafles de raisins contenues dans les effluents viti-vinicoles arrivant dans la cuve de régulation 4.

Elle comprend en outre sur sa paroi externe 44 un système de sécurité 10, par exemple un aérateur à membrane, destiné à compenser l'apparition d'une dépression éventuelle à l'intérieur de la cuve de régulation 4.

Le volume de la cuve de régulation 4 est déterminé en fonction de la production viti-vinicole par an de l'exploitation.

Le volume de la cuve de régulation 4, V_{C} en m³, nécessaire à un traitement efficace des effluents viti-vinicoles, est sensiblement égal au rapport V_{V}/300, où V_{V} est le volume de vin en hectolitres produit par an dans l'exploitation.

Dans un mode de réalisation particulier, V_{C} est au moins de trois m³.

Le rapport exprime ici le volume minimal de la cuve de régulation 4, nécessaire pour le traitement des effluents de l'exploitation.

Il est entendu que la cuve de régulation 4 peut avoir un volume supérieur à ce volume minimal.

La cuve de régulation 4 présente, dans le mode de réalisation représenté, un volume V_{C} qui est égal à sept mètres cube environ.

Les effluents sont distribués, à partir de la sortie 6 de la cuve de régulation 4, dans des seconds conduits 11 d'effluents à traiter et sont déversés dans deux regards de détente 12. Ces derniers sont disposés sensiblement parallèlement et en regard l'un de l'autre.

Il est possible d'adapter les moyens de régulation 3 à la topographie du terrain sur lequel est disposée l'installation.

Dans le cas où la pente du terrain est suffisante, il est aménagé une surverse (non représentée) de la cuve de régulation 4 vers les regards de détente 12.

Cette surverse permet notamment, en cas de risque de débordement de la cuve de régulation 4, d'évacuer le trop plein des effluents vers les regards de détente 12 sous l'effet de la gravité.

Dans le cas d'un terrain sensiblement plat, la cuve de régulation 4 est équipée de deux pompes 8.

Ainsi lors de l'arrivée dans la cuve de régulation 4, d'importants volumes d'effluents, la pompe 8 distribue dans les seconds conduits 11 des volumes déterminés d'effluents, tandis que le volume d'effluents en excès est stocké dans la cuve.

Ceci permet une adaptation facile et rapide de l'installation à la grande variabilité journalière des volumes d'effluents produits.

En aval de chaque regard 12, est disposée la cuve de décantation-digestion 7. Les deux cuves de décantation-digestion 7 sont disposées sensiblement en regard et parallèles l'une à l'autre.

Les effluents à traiter, acheminés dans des troisièmes conduits 13 d'effluents, s'écoulent par simple gravité d'un regard de détente 12 à l'entrée 60 de la cuve de décantation-digestion 7 correspondante.

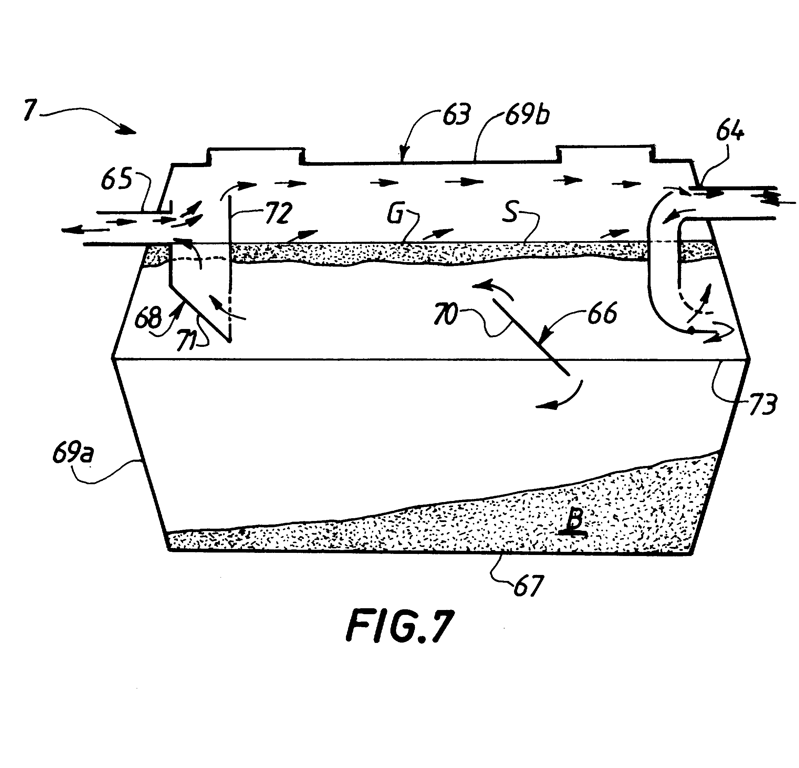

Selon un mode de réalisation de réalisation illustrée sur la figure 7, la cuve de décantation-digestion 7 comprend une enceinte 63, rigide, un conduit d'amenée 64 des effluents ; un conduit d'évacuation 65 des effluents décantés.

La cuve de décantation-digestion 7 comprend également, de façon connue en soi, des moyens 66 de décantation par dépôt dans le fond 67 de l'enceinte 63 des matières les plus lourdes ou boues B et par accumulation à la surface libre S des graisses des particules légères G ; et de liquéfaction au moins partielle de ces matières B, G par fermentation anaérobique.

Elle comprend enfin des moyens de protection 68 intégrés à l'enceinte 63 afin de prévenir tout colmatage ultérieur.

Selon le mode de réalisation illustré à la figure 7, les moyens 65 de décantation et de liquéfaction et les moyens de protection 68 sont placés dans un département unique de l'enceinte 63.

L'enceinte 63 comprend préférentiellement deux parties identiques ou sensiblement similaires l'une de l'autre à savoir une coquille inférieure 69a et une coquille supérieure 69b.

Les deux coquilles 69a, 69b sont réunies l'une à l'autre par leur grande base commune ouverte 73.

Le conduit d'amenée 64 forme un double coude replié sur lui-même.

La cuve de décantation-digestion 7 comprend également un premier déflecteur 70 placé dans l'enceinte 63, transversalement et constituant au moins en partie les moyens 66. Le premier déflecteur 70 a pour fonction d'améliorer la décantation et de limiter la progression des turbulences vers le fond 67 de l'enceinte 63.

Au conduit d'évacuation 65 est associée une cloison verticale 72 située pour partie au-dessus et pour partie au-dessous de la surface libre S.

La surface libre S est elle-même située sensiblement à mi-hauteur de la cloison 72.

Au conduit d'évacuation 65 est également associé un second déflecteur 71.

La cuve de décantation-digestion 7 est décrite plus en détail dans le brevet EP-B-0240 412.

Cette cuve de décantation-digestion 7 est destinée à éliminer la majeure partie des matières organiques solides en suspension.

Selon l'invention, le volume minimal V_{FS} de la cuve de décantation-digestion 7 en m³, nécessaire à un traitement efficace des effluents viti-vinicoles est sensiblement égal au rapport V_{V}/200. Dans un mode de réalisation particulier de l'invention, la cuve de décantation-digestion 7 a un volume d'au moins quatre mètres cube.

Le volume de chaque cuve de décantation-digestion 7 est, dans la variante représentée, de huit m³ environ.

Les effluents une fois décantés sont acheminés par gravité, dans les quatrièmes conduits 14, de la sortie 61 de chaque cuve de décantation-digestion 7 vers l'entrée 18 d'un premier filtre 15.

Les deux premiers filtres 15 sont disposés sensiblement parallèles et en regard l'un de l'autre.

Un regard de visite 16 est aménagé le long de chaque quatrième conduit 14, à égale distance de chaque cuve de décantation-digestion 7 et de chaque premier filtre 15 permettant ainsi de vérifier le bon fonctionnement de l'installation.

Selon une variante de réalisation, le premier filtre 15 est un filtre anaérobie.

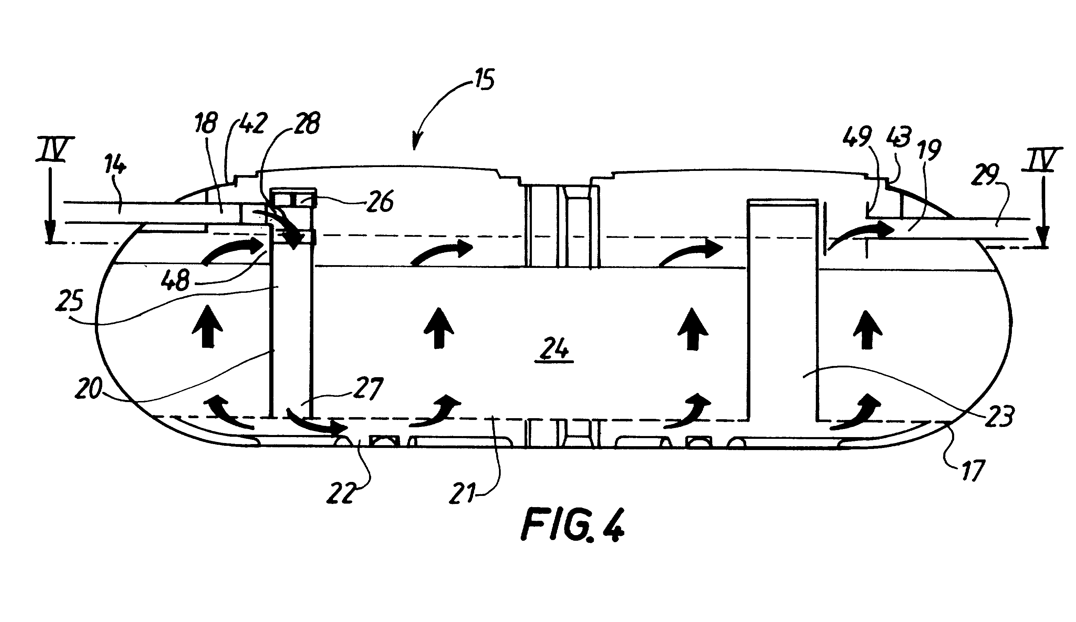

Sur la figure 4, le premier filtre anaérobie 15 comprend une cuve de filtration 17 d'axe transversal, munie d'une entrée 18 des effluents décantés et d'une sortie 19 des effluents une fois traités. L'entrée 18 et la sortie 19 sont disposées en opposition respectivement, chacune à une partie extrême 42, 43 de la cuve de filtration 17.

La cuve de filtration 17 comprend un premier puits 20 disposé du côté de l'entrée 18, une plaque perforée 21 disposée sur le fond 22 de la cuve de filtration 17, un second puits 23 situé du côté de la sortie 19 et un matériau 24.

Le premier puits 20 a la forme d'un tube 25 creux, d'axe longitudinal perpendiculaire sensiblement à celui de la cuve de filtration 17, la partie extrême supérieure 26 étant obturée tandis que la partie extrême inférieure 27 est ouverte. Cette dernière repose sur la plaque perforée 21. Le puits 20 comporte sur sa paroi latérale 48, du côté de sa partie extrême supérieure 26, une lumière 28 s'ouvrant en direction de l'entrée 18.

Le quatrième conduit 14 débouche dans le tube 25 par cette lumière 28.

Le second puits 23 a une forme de tube creux analogue au premier puits 20. Il repose sur la plaque perforée 21, son axe longitudinal est sensiblement parallèle à celui de la cuve de filtration 17. Il est destiné à permettre l'évacuation des boues pouvant s'accumuler dans le fond de la cuve de filtration 17.

Le matériau 24 contenu dans la cuve de filtration 17 doit présenter une grande surface de contact avec les bactéries.

Ce matériau 24 est par exemple, de la pouzzolane ou analogue.

La sortie 19 présente à l'intérieur de la cuve 17 une partie extrême interne 49 en forme de T. Cette forme particulière permet de fixer les voiles bactériens susceptibles d'être contenus dans les effluents filtrés.

Le volume minimal V_{PF} en m³ du premier filtre anaérobie 15 est sensiblement égal au rapport V_{V}/200. Dans une mode de réalisation particulier de l'invention, le premier filtre 15 a un volume d'au moins trois mètres cube.

Les effluents décantés, issus de la cuve de décantation-digestion 7, sont acheminés jusqu'à l'entrée 18 du premier filtre 15. Les effluents circulent ensuite dans le premier puits 20 jusqu'à la plaque perforée 21, puis passent au travers de la pouzzolane 24 pour être traités.

Une fois traités, les effluents sont acheminés, sous l'effet de la gravité dans des cinquièmes conduits 29 jusqu'à des moyens de distribution 30.

Les cinquièmes conduits 29 se rejoignent vers un regard de visite 47.

Ces moyens de distribution 30 sont destinés à déverser les effluents une première fois filtrés dans un ou plusieurs seconds filtres 31.

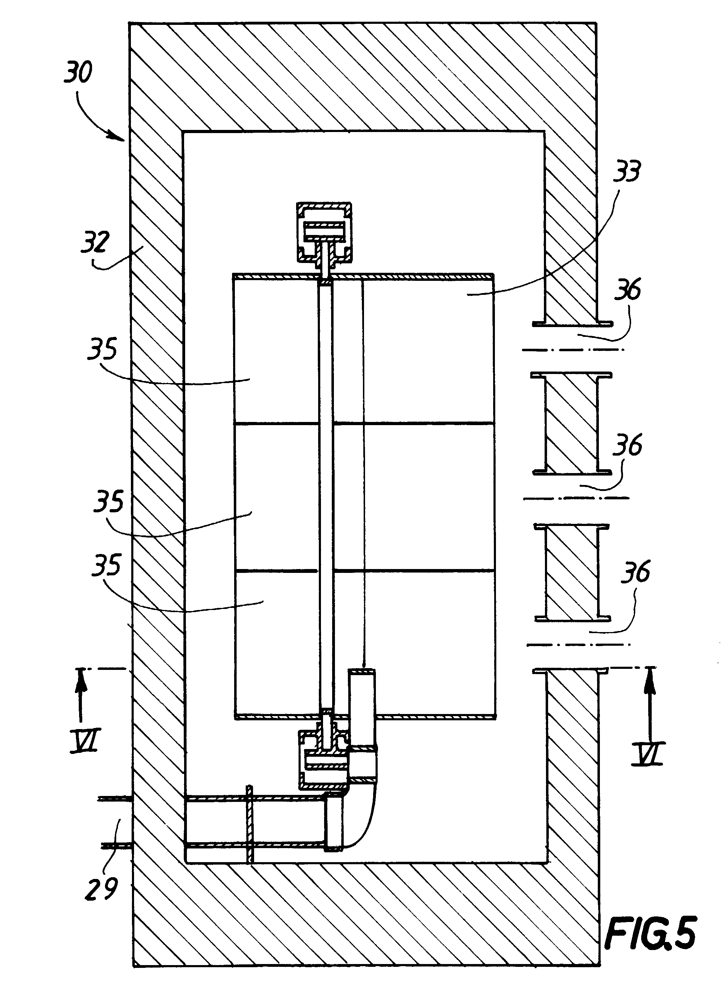

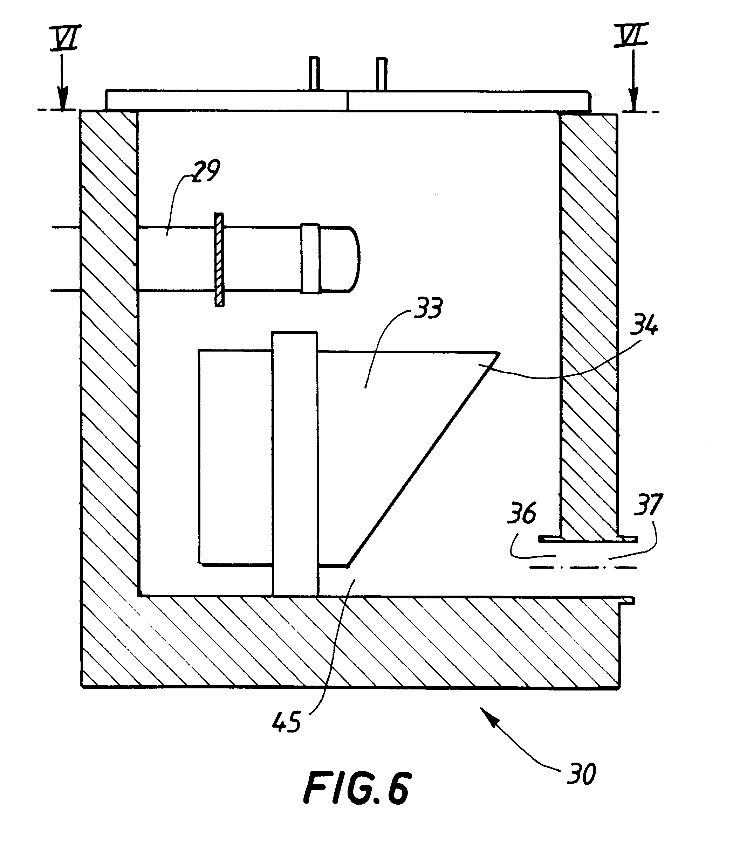

En référence aux figures 5 et 6, les moyens de distribution 30 comprennent une enceinte 32 dans laquelle est disposé un bac basculant 33. Ce bac 33 comporte un bec verseur 34, disposé du côté du second filtre 31.

Ce bac 33 comprend en outre plusieurs compartiments 35 communiquant entre eux.

Sur la figure 5, le bac 33 comprend trois compartiments 35.

L'enceinte 32 comporte dans sa paroi située du côté du second filtre 31 trois ouvertures 36 disposées au fond 45 de l'enceinte. Dans chaque ouverture 36, est disposé un conduit d'acheminement 37 des effluents filtrés vers un second filtre 31.

Les effluents sont donc déversés par les cinquièmes conduits 29 dans le bac 33. Le niveau monte jusqu'à ce que, sous l'effet du poids du bec verseur 34, l'équilibre du bac 33 est rompu. Ce dernier bascule en direction des ouvertures 36 et déverse alors les effluents dans l'enceinte 32.

Les effluents s'écoulent par gravité, acheminés dans les conduits 37, jusqu'aux seconds filtres 31.

Le bac basculant 33 a, dans la variante représentée, une capacité volumique d'environ 180 litres. Chaque second filtre 31 reçoit environ 60 litres d'effluents.

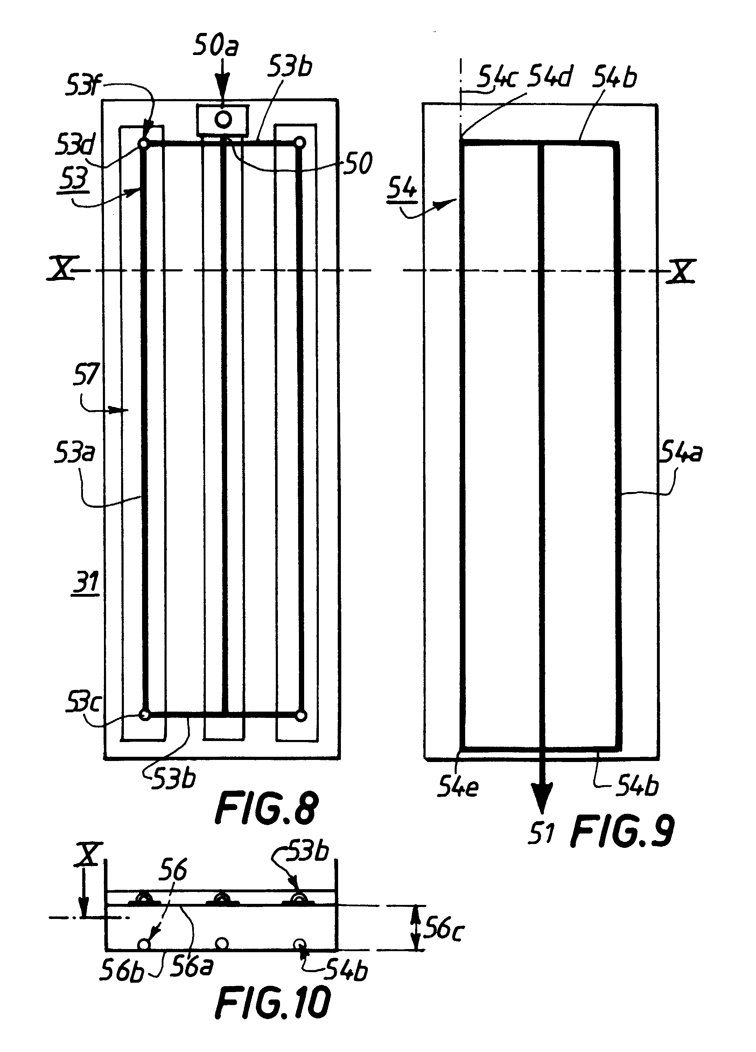

Selon un mode de réalisation illustré sur la figure 8, chaque second filtre 31 comporte une entrée 50 pour les effluents à traiter, une sortie 51 des effluents traités et des moyens de filtration interposés entre l'entrée 50 et la sortie 51.

Le bac basculant 33 provoque une alimentation par paquet du second filtre 31 en effluents à traiter. Cela permet d'obtenir une meilleure répartition des effluents dans le second filtre 31 ainsi qu'une meilleure épuration.

Dans le système de traitement considéré, le second filtre 31 est placé sensiblement horizontalement et à la surface du sol. Il peut cependant être partiellement enterré ou totalement enterré.

Les moyens de filtration du second filtre 31 comportent :
- deux réseaux de tuyaux 53, 54, respectivement de répartition et de drainage, associés respectivement à l'entrée 50 et à la sortie 51 placés sensiblement en regard et espacés l'un de l'autre, et pourvus de perforations 55 réparties longitudinalement dans leurs parois transversales ;
- des moyens filtrants 56 interposés entre les deux réseaux 53 et 54 et
- des moyens de répartition 57 associés au réseau de tuyaux de répartition 53 et destinés à assurer une diffusion des effluents à traiter vers les moyens filtrants 56.

Les moyens filtrants 56 se présentent sous la forme d'une couche granulaire filtrante. Cette couche granulaire filtrante 56 est en un matériau à dominante siliceuse et comprend plus particulièrement des granulats de zéolite, présentant une granulométrie comprise entre 0,1 et 10 mm environ. L'épaisseur de la couche 56 est comprise entre 0,5 et 1 m, elle est de préférence de 60 cm. Cette couche comprend par exemple soit entièrement des granulats entre 2 et 5 mm, soit 2 sous-couches, une supérieure de 2 à 5 mm et une inférieure de 0,2 à 2 mm. Les granulats de zéolite permettent, grâce à la présence d'interstices intergranulaires, une excellente circulation de l'air et donc une bonne croissance des microorganismes épurateurs. La zéolite fixe de plus bien la biomasse épuratrice et permet ainsi un bon rendement d'élimination de la charge polluante carbonnée des effluents.

D'autre part, la zéolite est constituée de grains microporeux qui permettent un écoulement de l'eau gravitaire entre les grains en cas de fort débit, et par capilarité d'un grain à l'autre en cas de faible débit.

Enfin, la zéolite possède des propriétés intéressantes d'élimination de la pollution azotée.

Le réseau de tuyaux de répartition 53 est adjacent à une première surface 56a de la couche granulaire filtrante 56. Il peut être situé à l'extérieur ou à l'intérieur de cette couche granulaire filtrante 56.

Dans une variante de réalisation illustrée à la figure 10, le réseau de tuyaux de répartition 53 est placé à l'extérieur de la couche granulaire filtrante 56.

De même, le réseau de tuyaux de drainage 54 est adjacent à une seconde surface 56b de la couche granulaire filtrante 56. Il peut également être situé à l'extérieur ou dans la couche granulaire filtrante 56. Dans l'exemple de réalisation considéré sur la figure, le réseau de tuyaux de drainage 54 est placé dans la couche granulaire filtrante 56.

Le réseau de tuyaux de répartition 53 comporte au moins une nappe de plusieurs tuyaux de répartition 53a espacés transversalement les uns par rapport aux autres et en communication les uns avec les autres notamment au voisinage de l'entrée 50 du second filtre 31.

D'après la forme de réalisation représentée sur la figure 8, les tuyaux de répartition 53a sont en communication les uns avec les autres par l'intermédiaire de tuyaux de communication 53b placés transversalement par rapport à l'axe longitudinal 53c des tuyaux de répartition 53a au niveau de leurs extrémités 53d, 53e. Les tuyaux de répartition 53a sont de préférence en PVC et ont un diamètre de 40 mm environ.

La distance d qui sépare les axes longitudinaux 53c de tuyaux de répartition 53a est, de préférence, de 1 m environ.

Le réseau de tuyaux de drainage 54 comporte au moins une nappe de plusieurs tuyaux de drainage 54b espacés transversalement les uns par rapport aux autres et en communication les uns avec les autres au voisinage de la sortie 51 du second filtre 31.

Dans l'exemple de réalisation considéré sur la figure 9, le réseau de tuyaux de drainage 54 a la même configuration que le réseau de tuyaux de répartition 53. Les tuyaux de drainage 54a sont donc en communication les uns avec les autres par l'intermédiaire de tuyaux de communication 54c placés aux extrémités 54d, 54e des tuyaux de drainage 54a transversalement par rapport à l'axe longitudinal 54d des tuyaux de drainage 54a. Les tuyaux de communication 54b situés à l'extrémité 54e des tuyaux de drainage 54a sont en communication avec la sortie 51 du second filtre 31.

Les tuyaux de drainage 54a sont également de préférence en PVC et ont un diamètre de 100 mm environ.

La distance d qui sépare les axes 6b des tuyaux de drainage 54a est ici la même que dans le cas du réseau de tuyaux de répartition 53.

Les moyens de répartition 57 associés au réseau de tuyaux de répartition 53 se présentent sous la forme d'une nappe d'absorption et de diffusion des eaux interposée entre le réseau de tuyaux de répartition 53 et les moyens filtrants 56, à savoir la couche granulaire filtrante 56.

Ce second filtre 31 est décrit plus en détail dans le brevet FR-B-2 717 101.

La surface minimale du second filtre 31, S_{F} en m², est sensiblement égale à V_{V} x 0.033. Elle est, dans la variante représentée, de 22 m² pour chaque second filtre 31, soit 66 m² au total.

Les effluents une fois filtrés sont ensuite recueillis au niveau d'un ou plusieurs regard de collecte 38.

A chaque second filtre 31 correspond un regard de collecte 38.

Les effluents ainsi traités sont alors acheminés vers un exutoire, par exemple un ruisseau.

En variante de réalisation, des moyens de filtration 39 supplémentaires sont disposés en aval des filtres 31. Ces moyens de filtration 39 supplémentaires consistent, par exemple en un filtre à sable, par exemple correspondant à la norme DTU (Document Technique Unifié) 64.1.

La surface minimale en m² de ces moyens 39 est sensiblement égale à V_{V} x 0,1.

Des exploitations dont le volume de production viti-vinicole par an est plus petit, de l'ordre par exemple de 1 000 hectolitres/an, peuvent utiliser une installation ne comprenant qu'une seule cuve de décantation-digestion 7 et qu'un seul premier filtre 15.

Il est possible d'autre part de raccorder plusieurs exploitations à une même installation.

L'installation selon l'invention peut être aussi destinée à traiter les effluents domestiques de la même exploitation viti-vinicole en même temps que les effluents viti-vinicoles.

Dans ce cas, seules les dimensions volumiques de la cuve de décantation-digestion 7 sont modifiées.

Selon une première variante de l'invention, les effluents viti-vinicoles et domestiques sont dirigées directement dans les moyens de régulation 3 après passage dans le regard de collecte 1.

Selon une autre variante de réalisation, une fosse septique, indépendante (non représentée) destinée à traiter spécialement les effluents domestiques est installée. Les effluents une fois décantés sont introduits dans l'installation, entre la cuve de décantation-digestion 7 et le premier filtre 15, dans les troisièmes conduits 13.

Il est nécessaire pour que le traitement des effluents domestiques et viti-vinicoles soit efficace, que la population dans l'exploitation, générant les effluents domestiques, pendant la période de vendange ne dépasse pas une valeur de seuil sensiblement égale au rapport V_{V}/33,3.

Le procédé de traitement des effluents viti-vinicoles est le suivant :
(a) collecter les effluents viti-vinicoles dans le regard de collecte 1 ;
(b) réguler le débit des effluents collectés par les moyens de régulations 3 ;
(c) décanter et digérer une majeure partie des matières en suspension dans les effluents dans la ou les cuves de décantation-digestion 7 ;
(d) filtrer les effluents décantés dans le premier filtre 15 anaérobie ;
(e) filtrer les effluents issus du premier filtre 15 dans le ou les seconds filtres 31 aérobie ;
(f) récolter les effluents ainsi traités dans les regards de collecte 38.

Le traitement des effluents domestiques dans la même installation que les effluents viti-vinicole peut être effectué selon au moins deux procédés différents.

Dans une variante de réalisation, les effluents domestiques sont déversés directement dans le regard de collecte 1, où ils se mélangent aux effluents viti-vinicoles.

Les effluents sont mélangés, ensuite soumis au procédé de traitement décrit ci-dessus.

Dans une autre variante de réalisation, les effluents domestiques sont tout d'abord traités dans une fosse septique indépendante.

Les effluents domestiques décantés sont ensuite acheminés vers une installation selon l'invention.

Ils sont déversés dans les troisièmes conduits 13 où ils se mélangent aux effluents viti-vinicoles décantés. Les effluents sont ensuite traités selon les étapes du procédé (d), (e) et (f).

## Revendications

1. Installation spécialement destinée au traitement des effluents viti-vinicoles d'au moins une exploitation, caractérisée en ce qu'elle comprend en combinaison, d'amont vers l'aval :
- au moins une cuve de décantation-digestion (7) de volume V_{CD}, destinée à éliminer la majeure partie des matières en suspension dans les effluents à traiter ;
- au moins un premier filtre (15), de volume V_{PF}, destiné à éliminer une partie au moins des matières solubles dans les effluents à traiter ;
- au moins un second filtre (31), de surface S_{F} ;
les dimensions volumiques V_{CD}, V_{PF} et surfacique S_{F}, respectivement de la cuve de décantation-digestion (7), du premier filtre (15) et du second filtre (31) étant proportionnelles au volume V_{V} de production viti-vinicole par an de l'exploitation.

2. Installation selon la revendication 1, caractérisée en ce que le volume V_{CD} de la cuve de décantation-digestion (7) est sensiblement égal au rapport V_{V}/200.

3. Installation selon la revendication 2, caractérisée en ce que le volume V_{CD} de la cuve de décantation-digestion (7) est d'au moins quatre mètres cube.

4. Installation selon l'une quelconque des revendications 1 à 3, caractérisée en ce que le volume V_{PF} du premier filtre (15) est sensiblement égal au rapport V_{V}/200.

5. Installation selon la revendication 4, caractérisée en ce que le volume V_{PF} est d'au moins trois mètres cube.

6. Installation selon l'une quelconque des revendications 1 à 5, caractérisée en ce que la surface S_{F} du second filtre (31) est sensiblement égale à V_{V} x 0.033.

7. Installation selon l'une quelconque des revendications 1 à 6, caractérisée en ce que le premier filtre (15) est un filtre anaérobie.

8. Installation selon l'une quelconque des revendications 1 à 7, caractérisée en ce que le second filtre (31) est un filtre aérobie.

9. Installation selon l'une quelconque des revendications 1 à 8, caractérisée en ce qu'elle comprend en outre, en amont de la cuve de décantation-digestion (7), des moyens de régulation (3) du débit d'entrée dans la cuve de décantation-digestion (7), des effluents viti-vinicoles.

10. Installation selon la revendication 9, caractérisée en ce que les moyens de régulation (3) sont munis d'au moins une pompe (8) destinée notamment à réguler le débit d'entrée des effluents viti-vinicoles dans la cuve de décantation-digestion (7),.

11. Installation selon la revendication 10, caractérisée en ce que le fonctionnement de la pompe (8) est régulé par au moins un contacteur de niveau et au moins un temporisateur.

12. Installation selon l'une quelconque des revendications 9 à 11, caractérisée en ce que les moyens de régulation (3) ont un volume V_{C} qui est sensiblement égal au rapport V_{V}/300.

13. Installation selon la revendication 12, caractérisée en ce que le volume V_{C} des moyens de régulation (3) est d'au moins trois mètres cube.

14. Installation selon l'une quelconque des revendications 1 à 13, caractérisée en ce qu'elle comprend en outre au moins un regard de détente (1) des effluents viti-vinicoles situé entre les moyens de régulation (3) et la cuve de décantation-digestion (7).

15. Installation selon l'une quelconque des revendications 1 à 14, caractérisée en ce qu'elle comprend en outre des moyens de distribution (30) des effluents viti-vinicoles provenant du premier filtre (15) et à destination du second filtre (31).

16. Installation selon l'une quelconque des revendications 1 à 15, caractérisée en ce qu'elle comprend des moyens supplémentaires (39) de filtration des effluents situés en aval du second filtre (31).

17. Installation selon la revendication 16, caractérisée en ce que les moyens supplémentaires (39) de filtration ont une surface S_{SF} sensiblement égale à V_{V} x 0,1.

18. Installation selon l'une quelconque des revendications 1 à 17, caractérisée en ce qu'elle est adaptée pour traiter les effluents domestiques.

19. Installation selon la revendication 18, caractérisée en ce qu'elle comprend en outre au moins une fosse septique spécialement destinée à traiter les effluents domestiques.

20. Procédé de traitement des effluents notamment viti-vinicoles comprenant en combinaison, les étapes suivantes :
- collecter les effluents viti-vinicoles ;
- réguler le débit des effluents collectés ;
- décanter et digérer une majeure partie des matières en suspension dans les effluents ;
- filtrer les effluents décantés ;
- filtrer les effluents une première fois filtrés ;
- récolter les effluents ainsi traités.

21. Procédé de traitement des effluents viti-vinicoles selon la revendication 20, caractérisé en ce qu'il est mis en oeuvre par l'installation selon l'une quelconque des revendications 1 à 19.
